# FASCICULE DE BREVET EUROPEEN

(11) **EP 3 655 492 B1**
(45) Date de publication et mention de la délivrance du brevet: **16.06.2021**
(21) Numéro de dépôt: 18740599.8
(22) Date de dépôt: 16.07.2018
(51) Int. Cl.: C09J 5/04, C09J 5/06, B32B 27/00, B29C 65/48

(54) **PROCÉDÉ D'ASSEMBLAGE PAR COLLAGE DE PIÈCES NOTAMMENT COMPOSITES À RENFORT FIBREUX**
VERFAHREN ZUR MONTAGE VON TEILEN, INSBESONDERE VERBUNDTEILEN MIT FASERVERSTÄRKUNGEN, DURCH KLEBEN
METHOD FOR ASSEMBLING PARTS, IN PARTICULAR COMPOSITE PARTS WITH FIBROUS REINFORCEMENTS, BY GLUING

(30) Priorité: 19.07.2017 FR 1756850
(43) Date de publication de la demande: 27.05.2020
(73) Titulaire: Airbus (S.A.S.), 31700 Blagnac (FR); ArianeGroup SAS, 75015 Paris (FR)
(72) Inventeur: CAVALIERE, Frédérick, 78180 Montigny le Bretonneux (FR); BERMUDEZ, Michel, 92150 Suresnes (FR); THOMAS, Bruno, 75015 Paris (FR); LEFEBURE, Patrice, 44700 Orvault (FR)
(74) Mandataire: Brevalex
(86) Numéro de dépôt international: PCT/EP2018/069278
(87) Numéro de publication internationale: WO 2019/016142

(56) Documents cités:
- EP-A2- 0 453 784
- WO-A1-2014/189946
- US-B1- 8 211 268

## Description

### Domaine de l'invention

La présente invention appartient au domaine de l'assemblage de pièces, notamment en matériau composite. Elle concerne plus particulièrement un procédé d'assemblage de pièces en matériau composite thermoplastique et/ou thermodurcissable.

L'invention est notamment adaptée à la réalisation de pièces dans le domaine aéronautique telles que des pièces structurales, des pièces de grandes dimensions et/ou de forme complexe.

### Etat de la technique

Les matériaux composites à renfort fibreux, qu'ils soient thermoplastiques ou thermodurcissables, sont aujourd'hui largement utilisés pour la fabrication de pièces dans de nombreux domaines industriels, tels que le domaine aéronautique ou spatial, y compris pour les pièces structurales, c'est-à-dire devant supporter des efforts significatifs lors de leur utilisation.

Un matériau composite est généralement constitué d'un renfort fibreux et d'une matrice en résine thermoplastique ou thermodurcissable, dont l'association permet d'obtenir un complexe dont les propriétés surpassent celles des matériaux de départ. Ainsi, les pièces en matériau composite présentent de nombreux avantages liés notamment à leurs propriétés mécaniques de résistance et rigidité, légèreté et facilité de mise en forme.

Certaines pièces structurales d'aéronef sont réalisées à partir de pièces individuelles puis assemblées les unes avec les autres. Il existe trois procédés d'assemblage :
- le procédé d'assemblage mécanique où les pièces sont percées et assemblées entre elles à l'aide de fixations ;
- le procédé d'assemblage par collage consistant en l'assemblage des pièces par polymérisation d'un adhésif à l'interface. Une fois polymérisée, la liaison est irréversible ;
- le procédé d'assemblage par soudage consistant en l'assemblage des pièces par ramollissement ou fusion de l'interface. Le ramollissement ou la fusion des matériaux est obtenu par chauffage. Contrairement à la polymérisation, le ramollissement ou la fusion est réversible.

Par exemple, les panneaux de fuselage ou de voilure sont constitués d'un assemblage d'une peau et de raidisseurs collés, puis sont assemblés aux autres pièces structurales de type cadre ou nervures à l'aide de fixations. Les deux procédés, assemblage mécanique et assemblage par collage, sont largement employés dans le domaine aéronautique, et souvent combinés l'un à l'autre pour des raisons de certification de la tenue mécanique de la liaison collée. Le procédé d'assemblage par soudage reste quant à lui très peu utilisé pour les applications structurales même si de nombreux travaux de développement sont menés sur ce procédé.

Pour l'assemblage de deux pièces en matériau composite thermodurcissable à renfort fibreux, les différentes variantes du procédé de collage sont bien connues de l'homme du métier. On peut citer notamment :
- le procédé de collage par co-cuisson, couramment appelé « cocuring» (terminologie anglo-saxonne) ; il consiste en l'assemblage par polymérisation de deux pièces non polymérisées, la jonction entre les deux pièces se faisant avec ou sans film adhésif ;
- le procédé de collage par co-collage ou « co-bonding » (terminologie anglo-saxonne) ; il consiste en l'assemblage par polymérisation d'une pièce non polymérisée avec une pièce polymérisée, la jonction entre les deux pièces se faisant par un film adhésif ;
- le procédé de collage par « secondary bonding » (terminologie anglo-saxonne) ; il consiste en l'assemblage par collage de deux pièces polymérisées, la jonction entre les deux pièces se faisant par un film adhésif.

Les films adhésifs utilisés préférentiellement sont de type époxy.

Ces procédés précités sont très largement utilisés pour les assemblages structuraux de pièces composites et bien que satisfaisants, ils présentent chacun de nombreux inconvénients. Pour le procédé de collage par co-cuisson, le principal inconvénient réside dans une mise en oeuvre complexe des pièces et des outillages. Pour les procédés de collage par co-collage et par « secondary bonding », les principaux inconvénients résident dans la nécessité d'effectuer des opérations de préparation de surface de pièces avant leur assemblage, et dans la sensibilité de la tenue mécanique de la liaison collée à une pollution de surface avant collage.

Pour l'assemblage de deux pièces en matériau composite thermoplastique à renfort fibreux, le procédé de collage n'est pas employé pour des applications structurales principalement en raison d'une tenue mécanique insuffisante de la liaison collée, sauf à procéder à des traitements de surface complexes et coûteux des pièces thermoplastiques, tels que par exemple un traitement de surface par plasma.

Le procédé de soudage est employé pour l'assemblage structural de pièces thermoplastiques. On peut citer, de manière non exhaustive :
- le procédé de soudage par co-consolidation,
- le procédé de soudage par ultrasons,
- le procédé de soudage par résistance,
- le procédé de soudage par friction,
- le procédé de soudage par induction,
- le procédé de soudage par ramollissement d'un film thermoplastique amorphe en surface de chacune des pièces thermoplastiques, ledit film thermoplastique amorphe présentant une température de ramollissement inférieure à la température de mise en oeuvre du matériau thermoplastique des pièces à assembler.

Le soudage peut être statique, c'est-à-dire un soudage simultané de tout l'interface entre les deux pièces à assembler, ou bien le soudage peut être dynamique, c'est-à-dire un soudage progressif de l'interface à assembler. Ces procédés sont bien connus de l'homme du métier.

Pour l'assemblage d'une pièce thermoplastique avec une pièce thermodurcissable, au même titre que l'assemblage de deux pièces thermoplastiques, le collage n'est pas employé pour les applications structurales principalement en raison d'une faible tenue mécanique de la liaison collée et/ou de la nécessité d'un traitement de surface complexe pour la pièce thermoplastique.

L'assemblage d'une pièce thermoplastique avec une pièce thermodurcissable peut quant à lui être indirectement réalisé par un procédé de soudage au moyen d'un film thermoplastique amorphe placé en surface de la pièce thermodurcissable lors de la polymérisation de cette dernière. La liaison avec la pièce thermoplastique est réalisée au moyen du procédé de soudage par induction, par ultrasons, ou par résistance, afin de chauffer très localement l'interface et ne pas dégrader la résine thermodurcissable de la deuxième pièce du fait d'un chauffage excessif. Cependant, ce procédé de soudage, encore au stade de développement, n'est pas employé pour les applications structurales.

Il existe par conséquent un besoin pour proposer une solution permettant de réaliser des collages entre deux pièces en matériau composite thermodurcissable et/ou thermoplastique, présentant une bonne tenue mécanique, et une fiabilité de la liaison collée semblable à celle obtenue avec le procédé de collage par co-cuisson, tout en présentant une plus grande facilité de mise en oeuvre afin de diminuer les coûts et tout en diminuant le recours à des opérations de préparation de surface. Il y a également un besoin pour proposer une solution permettant des collages entre une pièce en matériau composite thermodurcissable ou thermoplastique et une pièce différente, telle qu'un métal, une céramique ou d'autres matériaux.

### Exposé de l'invention

La présente invention concerne un procédé d'assemblage de deux pièces, dites première et seconde pièces, la première pièce étant réalisée en matériau composite à renfort fibreux noyé dans une matrice thermodurcissable ou thermoplastique. Le procédé comportant les étapes de :
- obtention de la première pièce, comportant sur tout ou partie d'une surface extérieure, un premier film thermoplastique amorphe,
- positionnement de la première pièce et de la seconde pièce de telle sorte que le premier film thermoplastique amorphe est placé en vis-à-vis de la deuxième pièce,
- introduction d'une résine thermodurcissable entre le premier film thermoplastique amorphe et la seconde pièce,
- polymérisation au moins partielle de ladite résine thermodurcissable.

La résine thermoplastique amorphe des films est préférablement choisie en fonction de sa solubilité avec la résine thermodurcissable durant la phase de polymérisation de la résine thermodurcissable, la résine thermodurcissable agissant alors comme un solvant, et de la capacité des matériaux thermodurcissable et thermoplastique à inter diffuser afin de créer une interphase.

Bien que la résine thermoplastique ait déjà inter diffusé sur la surface en contact avec la première pièce, lors de la réalisation de ladite première pièce, cette résine thermoplastique peut de nouveau inter diffuser sur la surface opposée en contact avec la résine thermodurcissable, lors de l'étape de polymérisation de l'assemblage.

Les chaines polymères de la résine thermodurcissable s'entremêlent, sans toutefois se lier, aux chaines polymères du film thermoplastique amorphe, jusqu'à polymérisation complète de la résine thermodurcissable.

La liaison obtenue entre les résines thermodurcissable et thermoplastique est une liaison polymérisée donc irréversible, contrairement aux liaisons obtenues par soudage.

La liaison polymérisée obtenue présente une interphase, cette liaison est en conséquence une liaison forte présentant une bonne tenue mécanique.

Le procédé d'assemblage selon l'invention peut ainsi se définir comme un procédé de collage par co-cuisson.

Le procédé d'assemblage selon l'invention permet de manière très avantageuse d'assembler une pièce en matériau composite thermodurcissable, ou une pièce en matériau composite thermoplastique, comportant un film thermoplastique amorphe en surface avec une autre pièce en matériau composite thermodurcissable, ou une autre pièce en matériau composite thermoplastique, ou encore une pièce quelconque.

En d'autres termes, un tel procédé permet donc d'assembler entre elles des pièces qui habituellement ne sont pas assemblées par collage, telles que les pièces en matériau composite thermoplastique.

Le procédé d'assemblage selon l'invention permet, de plus, de se dispenser des coûteuses et complexes opérations de préparation de surface des pièces, notamment les pièces en matériau composite thermoplastique.

Le procédé d'assemblage selon l'invention permet également de réaliser des assemblages structuraux, avec des pièces de grandes dimensions et/ou de géométrie complexe indépendamment des matériaux constituant lesdites pièces. Suivant des modes de mises en oeuvre préférés, l'invention répond en outre aux caractéristiques suivantes, mises en oeuvre séparément ou en chacune de leurs combinaisons techniquement opérantes.

Dans des modes préférés de mise en oeuvre, l'étape d'introduction de la résine thermodurcissable est réalisée par l'insertion, entre le premier film thermoplastique amorphe et la seconde pièce, d'un film adhésif comportant une résine thermodurcissable.

Dans des modes préférés de mise en oeuvre, la résine thermodurcissable est introduite par injection. Ces modes de mise en œuvre sont préférés principalement lorsque les pièces sont de grandes dimensions et/ou à géométrie complexe.

Dans des modes préférés de mise en oeuvre, le procédé d'assemblage comporte une étape d'introduction d'un voile perméable entre le premier film thermoplastique amorphe et la seconde pièce, préalablement à l'étape d'introduction de la résine thermodurcissable. Ces modes de mise en oeuvre sont préférés principalement lorsque les pièces présentent une géométrie complexe, pour maintenir un écart suffisant entre les pièces. Cet écart est aussi appelé entrefer.

Dans des exemples préférés de mise en oeuvre, le premier film thermoplastique amorphe est choisi parmi un polyetherimide (PEI), un polyethersulfone (PES), un polysulfone (PSU) et un polyfluorure de vinylidène (PVDF).

Dans des exemples préférés de mise en oeuvre, la résine thermodurcissable introduite est du type époxy.

Dans des modes préférés de mise en oeuvre, lorsque la première pièce est une pièce comportant sur tout ou partie d'une surface extérieure un premier film thermoplastique amorphe, et la seconde pièce est une pièce comportant sur tout ou partie d'une surface extérieure un second film thermoplastique amorphe, les deux pièces sont positionnées de telle sorte que les premier et second films thermoplastiques amorphes sont placés en vis-àvis, et la résine thermodurcissable est introduite entre les premier et second films thermoplastiques amorphes.

L'invention est également relative à un ensemble structural obtenu conformément au procédé d'assemblage dans au moins l'un de ses modes de mise en oeuvre.

L'invention est également relative à un procédé d'assemblage d'un panneau sandwich comportant un matériau d'âme entre deux peaux, dites première et seconde peau. Chaque peau est réalisée en matériau composite à renfort fibreux noyé dans une matrice thermodurcissable ou thermoplastique comportant sur tout ou partie d'une surface extérieure un film thermoplastique amorphe. Le procédé comporte les étapes de :
- assemblage de la première peau et du matériau d'âme conformément au procédé d'assemblage tel que précédemment décrit dans au moins l'un de ses modes de mise en oeuvre, la première peau correspondant à la première pièce et le matériau d'âme à la seconde pièce,
- assemblage de la seconde peau et du matériau d'âme conformément au procédé d'assemblage tel que précédemment décrit dans au moins l'un de ses modes de mise en oeuvre, la deuxième peau correspondant à la première pièce et le matériau d'âme à la seconde pièce.

Le procédé d'assemblage du panneau sandwich permet avantageusement de s'affranchir des opérations de préparation de surface avant collage. Il est ainsi possible, à partir de ce procédé, de réaliser des panneaux sandwich avec des peaux en matériau composite thermoplastique.

### Description des figures

L'invention sera maintenant plus précisément décrite dans le cadre de modes de réalisation particuliers, qui n'en sont nullement limitatifs, représentés sur les figures 1 à 8, illustrant :
Figure 1 illustre schématiquement une étape de drapage d'une pièce en matériau composite thermodurcissable ou thermoplastique et d'un film thermoplastique amorphe en surface,
Figure 2 illustre schématiquement une étape de polymérisation ou consolidation de la pièce de la figure 1,
Figure 3 illustre schématiquement une étape de positionnement l'une par rapport à l'autre des deux pièces de la figure 1, lors d'un procédé d'assemblage desdites deux pièces,
Figure 4 illustre schématiquement l'étape de polymérisation des deux pièces de la figure 3 lors d'un procédé d'assemblage,
Figure 5 illustre schématiquement l'assemblage des deux pièces à l'issue de l'étape de polymérisation,
Figure 6 illustre schématiquement une étape de positionnement de la pièce de la figure 1 et d'une autre pièce ne comportant pas de film thermoplastique amorphe, lors d'un procédé d'assemblage desdites deux pièces,
Figure 7 illustre schématiquement une étape de polymérisation de la pièce de la figure 1 et d'un matériau d'âme à structure alvéolaire pour la réalisation d'un panneau sandwich,
Figure 8 illustre schématiquement une étape de polymérisation de la pièce de la figure 1 et d'un matériau d'âme sous forme de mousse pour la réalisation d'un panneau sandwich.

### Description d'un mode préféré de réalisation

Les exemples de réalisation sont décrits de manière détaillée dans son application au domaine aéronautique, notamment au cas d'une pièce d'aéronef. Ce choix n'est pas limitatif et peut s'étendre à d'autres domaines, notamment le domaine spatial ou encore automobile.

Le procédé d'assemblage selon l'invention permet d'assembler deux pièces par collage pour former un ensemble. Les pièces peuvent être identiques ou être réalisées dans des matériaux différents.

Au moins une des deux pièces est une pièce en matériau composite à renfort fibreux noyé dans une matrice thermoplastique ou thermodurcissable.

Dans la suite de la description, on nommera pièce polymérisée 10, une pièce en matériau composite à renfort fibreux noyé dans une matrice thermodurcissable. On nommera pièce consolidée 20, une pièce en matériau composite à renfort fibreux noyé dans une matrice thermoplastique.

La pièce polymérisée 10 ou consolidée 20 comporte en outre un film thermoplastique amorphe 13, 23 sur tout ou partie d'une surface extérieure 12, 22.

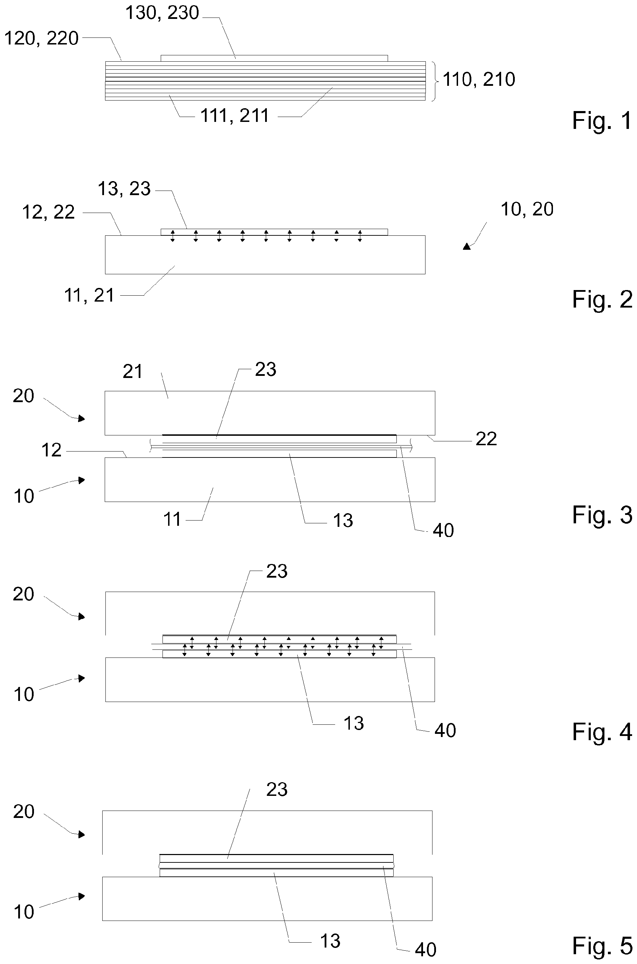

Dans la suite de la description, on décrira, de manière non limitative, l'assemblage d'une pièce polymérisée 10 avec un film thermoplastique amorphe 13 et d'une pièce consolidée 20 avec un film thermoplastique amorphe 23, comme illustré sur les figures 3 à 5.

Pour réaliser le procédé d'assemblage selon l'invention, une première étape consiste à obtenir :
- une première pièce comportant sur tout ou partie d'une surface extérieure, un premier film thermoplastique amorphe,
- une seconde pièce comportant sur tout ou partie de la surface extérieure, un second film thermoplastique amorphe.

Dans l'exemple non limitatif, la première pièce est une pièce polymérisée 10 et la seconde pièce est une pièce consolidée 20.

Cette étape peut consister soit dans la réalisation de chaque pièce, soit dans la sélection d'une pièce parmi des pièces qui ont été préalablement réalisées et stockées dans l'attente de leur utilisation ultérieure.

La réalisation de l'une ou l'autre des deux pièces est connue en tant que telle et rappelée ci-après.

### Réalisation d'une pièce polymérisée 10 avec un film thermoplastique amorphe 13

Un exemple de mise en oeuvre de la réalisation d'une telle pièce 10 est décrit à titre non restrictif et illustré par les figures 1 et 2. Dans une première sous-étape, une préforme 110 pré-imprégnée est réalisée.

La préforme 110 est définie de façon telle que la forme et le volume correspondent sensiblement à la forme et aux dimensions de la pièce finale à réaliser.

La préforme 110 est par exemple réalisée sur un moule, dont la forme et le volume correspondent sensiblement à la forme et aux dimensions de la pièce à réaliser.

La préforme 110 est réalisée par un seul pli 111, ou une superposition d'au moins deux plis 111, de fibres pré-imprégnées d'une résine non polymérisée.

La nature et les orientations des fibres dans le(s) pli(s) sont déterminées selon le type de sollicitations mécaniques auxquelles sera soumise la pièce, une fois celle-ci réalisée.

Lorsque la préforme 110 est réalisée par une superposition de plis 111, la détermination du nombre de plis et orientations des fibres dans les plis successifs fait partie des techniques de calcul connues et non décrites ici.

Dans un exemple de mise en oeuvre, la préforme 110 comporte une superposition de fibres pré-imprégnées, par exemple des nappes unidirectionnelles, en carbone. La préforme pourrait également être constituée par exemple de fibres de verre et/ou fibres de kevlar.

Le(s) pli(s) 111 est(sont) pré-imprégné(s) d'une résine de type thermodurcissable, par exemple une résine époxy, ou bismaléimide, ou phénolique, ou ester cyanate.

Dans un exemple de mise en oeuvre, le(s) pli(s) est(sont) imprégné(s) d'une résine époxy dont le monomère de base est principalement de type DGEBA (Diglycidyl éther de bisphénol A), TGPAP (Triglycidyl para aminophénol), ou TGMDA (Tétraglycidyl méthylène dianiline) et l'agent durcisseur est de type amine, tel que la diaminodiphényl sulfone (DDS).

Dans une deuxième sous-étape, illustrée figure 1, une couche 130 comportant une résine thermoplastique amorphe est déposée localement sur la préforme 110.

Dans un exemple de mise en oeuvre, la couche 130 est formée par un pli constitué d'une résine thermoplastique amorphe.

La couche 130 est déposée localement sur tout ou partie d'une surface 120 d'un pli externe de la préforme 110, à un emplacement où la pièce, une fois celle-ci réalisée, est destinée à être assemblée à une autre pièce, par collage.

Dans un autre exemple de mise en oeuvre, la couche 130 est réalisée par pulvérisation, surtout ou partie d'une surface d'un pli externe de la préforme, de fines particules de résine thermoplastique amorphe.

Quelque soit l'exemple de mise en oeuvre de dépôt de la couche, la résine thermoplastique amorphe est préférentiellement un polyetherimide (PEI), un polyethersulfone (PES), un polysulfone (PSU), un polyfluorure de vinylidène (PVDF).

Dans une troisième sous-étape, l'ensemble préforme-couche est polymérisé. Une bâche à vide et des produits d'environnement sont mis en place autour de l'ensemble préforme-couche.

La bâche à vide est rendue étanche par des moyens connus. La mise sous vide de l'ensemble préforme-couche est ensuite effectuée, ayant pour but de compacter l'ensemble préforme-couche, notamment les plis. L'ensemble préforme-couche est ensuite soumis à un traitement thermique, à une température, une durée et une pression déterminées.

Dans l'exemple préféré de la résine de type époxy, la résine est une résine thermodurcissable polymère dont la réticulation se fait à température supérieure ou égale à 110°C.

La résine thermoplastique est choisie notamment en fonction de son caractère amorphe, de sa solubilité avec la résine thermodurcissable durant la phase de polymérisation de la résine thermodurcissable, la résine thermodurcissable agissant alors comme un solvant pour le thermoplastique amorphe, et de la capacité des matériaux thermodurcissable et thermoplastique à inter diffuser afin de créer une interphase. Cette interphase consiste en une transition graduelle entre les deux matériaux pouvant aller jusqu'à l'entrelacement des chaînes polymères des deux matériaux (on parle alors de réseaux semi-inter pénétrants). Dans cette zone, les deux matériaux sont intimement imbriqués, créant ainsi un lien fort entre les deux matériaux. Il n'y a pas de continuité des chaînes polymères entre les deux matériaux. Dans l'exemple de mise en oeuvre, l'étape de polymérisation est réalisée à une température de 180° C. L'inter diffusion se produit jusqu'à une température d'environ 175° C, ensuite l'interphase se fige du fait de la polymérisation de la résine thermodurcissable.

Lors de l'étape de polymérisation, la résine thermodurcissable contenue dans la préforme se répand dans celle-ci en remplissant les zones de vide entre les fibres des différents plis. La couche quant à elle ne s'imprègne pas de la résine thermodurcissable de la préforme puisqu'elle est déjà imprégnée de sa propre résine thermoplastique.

Pendant le cycle de polymérisation, la viscosité des résines de la couche et de la préforme diminue avec l'augmentation de la température. A partir d'une certaine température, la résine thermodurcissable devient un solvant pour la résine thermoplastique amorphe. Les chaines polymères contenues dans la résine thermodurcissable de la préforme vont migrer dans la couche et les chaines polymères contenues dans la résine thermoplastique de la couche vont migrer dans la préforme, comme illustré par les flèches sur la figure 2. On observe alors création et interdiffusion des chaines polymères de la résine thermodurcissable de la préforme et de la résine thermoplastique de la couche.

A l'issue de cette troisième sous-étape, la première pièce 10 est démoulée. La première pièce 10 obtenue comporte une structure 11, polymérisée, formée d'un ensemble de fibres maintenues dans une résine thermodurcissable et comportant sur tout ou partie d'une surface extérieure 12 un premier film thermoplastique amorphe 13. Après des éventuelles opérations de contrôle de la santé matière, ou de finitions par exemple des perçages ou des usinages, la pièce polymérisée 10 obtenue est susceptible d'être assemblée par collage à une autre pièce, comme illustrées sur les figures 3 à 5.

Dans un exemple de réalisation, des nappes de fibres carbone unidirectionnelles imprégnées avec la résine thermodurcissable époxy M18 de la société 'HEXCEL®, sont empilées les unes sur les autres avec les bonnes orientations des fibres pour former un stratifié. Un film thermoplastique, constitué de la résine PEI Ultem 1000 de SABIC® est placé en surface de ce stratifié. L'épaisseur du film est comprise entre 50µm et 250µm. Le film de résine PEI ne subit avantageusement aucune préparation de surface particulière si celui-ci a été stocké et manipulé dans les conditions normales de propreté, d'humidité et de température connues de l'homme du métier. L'ensemble est ensuite placé sous une bâche à vide avec les produits d'environnement connus de l'homme du métier pour assurer un bon drainage de l'air et une bonne application de la pression pendant le cycle de polymérisation. Une tôle de lissage peut être utilisée en surface de la pièce afin d'assurer un bon état de surface de la pièce finale. Le cycle de polymérisation appliqué se déroule à une température de 180°C pendant deux heures sous une pression de 7 bars. La résine PEI du film présente une bonne compatibilité avec la résine M18. La solubilité de la résine PEI avec la résine thermodurcissable époxy M18 intervient à partir d'une température d'environ 110°C, la résine thermodurcissable époxy M18 devenant alors un solvant pour la résine PEI. Il est constaté une bonne inter diffusion des deux matériaux jusqu'à une température d'environ 175°C. Après polymérisation et démoulage, la pièce finale est constituée d'un stratifié carbone / époxy M18 polymérisé, avec un film thermoplastique PEI en surface. La zone d'interphase présente une épaisseur d'environ 50µm.

Après des éventuelles opérations de contrôle de la santé matière, ou de finitions par exemple des perçages ou des usinages, la pièce polymérisée obtenue est susceptible d'être assemblée par collage à une autre pièce.

Réalisation d'une pièce consolidée 20 avec un film thermoplastique amorphe Dans le cas de la réalisation d'une pièce consolidée 20 avec un film thermoplastique amorphe 23 en toute ou partie de sa surface extérieure 22, les deux premières sous-étapes sont identiques, à la différence près que la préforme 210, réalisée à partir d'au moins un pli 211, est imprégnée d'une résine thermoplastique. Les figures 1 et 2 peuvent également représenter des sous-étapes de réalisation d'une pièce consolidée 20. Une couche 230, comportant une résine thermoplastique amorphe, est déposée localement sur tout ou partie d'une surface 220 d'un pli externe de la préforme 210, à un emplacement où la pièce, une fois celle-ci réalisée, est destinée à être assemblée à une autre pièce, par collage.

La résine thermoplastique de la préforme 210 est par exemple une résine polyetheretherketone (PEEK), polyetherketoneketone (PEKK), polyarylétherketone (PAEK), polypropilènesulfone (PPS). Toutes ces résines sont des résines thermoplastiques semi-cristallines.

La résine thermoplastique amorphe de la couche 230 est choisie de telle sorte que sa température de fusion soit sensiblement égale à la température de fusion de la résine thermoplastique de la préforme, qu'elle présente une bonne inter diffusion des matériaux thermoplastique et thermoplastique amorphe à la température de mise en oeuvre de la résine thermoplastique constituant le stratifié. Elle est également choisie de telle sorte qu'elle présente une bonne solubilité avec la résine thermodurcissable époxy et une bonne inter diffusion pendant la polymérisation de la résine thermodurcissable lors de l'opération d'assemblage. Dans l'exemple de la résine PEEK, la température de mise en oeuvre est 400 ° C.

La troisième sous-étape est une étape de consolidation.

Cette étape de consolidation consiste à compacter la préforme 210 avec le film thermoplastique amorphe à la forme définitive de la pièce en la soumettant à un cycle de température et de pression déterminées.

La rigidification de l'ensemble est obtenue lors du refroidissement sous pression jusqu'à température ambiante à laquelle il conserve les formes acquises lors du compactage.

A l'issue de cette sous-étape, la pièce 20 est démoulée. La première pièce obtenue 20 comporte une structure 21, consolidée, formée d'un ensemble de fibres maintenues dans une résine thermoplastique et comportant sur tout ou partie d'une surface extérieure 22 un premier film thermoplastique amorphe 23. Dans un exemple de réalisation, des nappes de fibres carbone unidirectionnelles imprégnées avec la résine thermoplastique PEEK de la société VICTREX®, sont empilées les unes sur les autres avec les bonnes orientations des fibres pour former un stratifié. Un film thermoplastique, constitué de la résine PEI Ultem 1000 de SABIC® est placé en surface de ce stratifié. L'épaisseur du film est comprise entre 50µm et 250µm. Le film de résine PEI ne subit avantageusement aucune préparation de surface particulière si celui-ci a été stocké et manipulé dans les conditions normales de propreté, humidité et température, connues de l'homme du métier. L'ensemble est ensuite placé sous une bâche à vide avec les produits d'environnement connus de l'homme du métier pour assurer un bon drainage de l'air et une bonne application de la pression pendant le cycle de consolidation. Une tôle de lissage peut être utilisée en surface de la pièce afin d'assurer un bon état de surface de la pièce finale. Le cycle de consolidation appliqué se déroule à une température de 400°C pendant 20 minutes sous simple dépression. La résine du film PEI présente une bonne compatibilité avec la résine PEEK. La fusion de la résine PEI intervient à environ 350°C et la fusion de la résine PEEK intervient à 343°C. Une bonne inter diffusion des deux matériaux est obtenue lorsque les deux matériaux sont à l'état fondu. Après démoulage, la pièce finale est constituée d'un stratifié carbone / PEEK consolidé, avec un film thermoplastique PEI en surface. La zone d'interphase présente une épaisseur d'environ 50µm.

Après des éventuelles opérations de contrôle de la santé matière, ou de finitions par exemple des perçages ou des usinages, la pièce consolidée obtenue est susceptible d'être assemblée par collage à une autre pièce. Dans une deuxième étape du procédé d'assemblage, la pièce consolidée 20 et la pièce polymérisée 10 sont positionnées l'une par rapport à l'autre.

La pièce consolidée 20 et la pièce polymérisée 10 sont positionnées de telle sorte que le premier film thermoplastique amorphe 13 de la pièce polymérisée 10 est placé en vis-à-vis du second film thermoplastique amorphe 23 de la pièce consolidée 20.

La zone où les deux films thermoplastiques amorphes 13, 23 sont placés en vis-à-vis est dite zone de collage.

Puis, dans une troisième étape du procédé d'assemblage, une résine thermodurcissable est introduite entre les premier et second films thermoplastiques amorphes 13, 23.

Dans un mode de mise en oeuvre, la résine thermodurcissable est injectée. Dans un exemple de mise en oeuvre, la pièce consolidée 20 et la pièce polymérisée 10 sont préalablement placées dans une enceinte hermétiquement fermée.

L'enceinte hermétiquement fermée est délimitée par exemple par un ensemble moule-contre moule ou moule-bâche à vide entourant l'ensemble préforme-tissu fibreux.

Une résine thermodurcissable est ensuite injectée dans l'enceinte hermétiquement fermée délimitée par le moule ou la bâche à vide.

Dans un exemple de réalisation, la résine injectée est une résine de type époxy, par exemple la résine HexFlow® RTM6 d'HEXCEL®. Cette résine présente avantageusement une très bonne compatibilité avec la résine thermoplastique PEI. En d'autres termes, les deux matériaux présentent une très bonne inter diffusion pendant le cycle de polymérisation de la résine RTM6.

Ce mode de mise en oeuvre est choisi de manière préférentielle lorsque les pièces à assembler sont de grandes dimensions et à géométrie complexe.

Dans un autre mode de mise en oeuvre, comme illustré sur la figure 3, un film adhésif 40 est intercalé dans la zone de collage. Ledit film adhésif est constitué d'une résine thermodurcissable. Ledit film adhésif thermodurcissable peut être supporté ou non. Par « supporté » on entend que le film adhésif peut contenir un tissu ou un mat de fibres permettant de manipuler ledit film adhésif et permettant de maintenir une épaisseur minimum d'adhésif lors de l'assemblage.

Dans un exemple de réalisation, le film d'adhésif 40 est à base de résine de type époxy, par exemple le film FM® 300 de CYTEC - SOLVAY Group®.

Ce mode de mise en oeuvre est choisi de manière préférentielle lorsque les pièces ne présentent pas de géométrie complexe, c'est-à-dire lorsque les pièces sont sensiblement planes ou présentent un seul rayon de courbure au niveau de la zone de collage. Une telle pièce peut être par exemple, un panneau de fuselage d'aéronef qui ne présente qu'un rayon de courbure simple, et qui est sensiblement plan dans la longueur.

Un tel mode de mise en oeuvre permet de simplifier le procédé d'assemblage par rapport au mode de mise en oeuvre d'introduction de la résine par injection.

La pièce polymérisée et la pièce consolidée 20 sont ensuite mises en contact sous pression dans la zone de collage puis confinées dans une enceinte hermétiquement fermée pour y créer ultérieurement les conditions nécessaires à une polymérisation.

Dans une dernière étape, l'ensemble est polymérisé. Pendant cette étape, la résine thermodurcissable et la résine thermoplastique des films thermoplastiques amorphes 13, 23 de chaque pièce 10, 20 inter diffusent sur une plage de températures comprise globalement entre 110° et 175°C, températures proches de la température de polymérisation de la résine thermodurcissable. Cela est rendu possible grâce au caractère réversible des résines thermoplastiques. En effet, la viscosité d'une résine thermoplastique diminue de nouveau lorsqu'elle subit à nouveau un cycle de chauffe. Ainsi bien que la résine thermoplastique ait déjà inter diffusé sur la surface en contact avec la pièce consolidée 20, ou sur la surface en contact avec la pièce polymérisée 10, cette résine peut de nouveau se dissoudre et inter diffuser sur la surface opposée en contact avec l'adhésif en résine thermodurcissable suivant le même processus que précédemment décrit. On rappelle que la résine thermoplastique amorphe des films 13, 23 a été choisie en fonction de sa solubilité avec la résine thermodurcissable introduite, durant la phase de polymérisation de la résine thermodurcissable, et de la capacité des matériaux thermodurcissable et thermoplastique à inter diffuser afin de créer une interphase.

On rappelle également que, la température de fusion de la résine thermoplastique de la pièce consolidée étant très supérieure à la température nécessaire à la polymérisation de la résine thermodurcissable, seule la résine thermoplastique des films thermoplastiques amorphes des pièces consolidées va inter diffuser avec la résine thermodurcissable pendant la polymérisation.

Les chaines polymères de la résine thermodurcissable introduite et des films thermoplastiques amorphes 13, 23, vont ainsi migrer et inter-diffuser, comme illustré par les flèches sur la figure 4.

Dans la zone d'interphase, ces chaines polymères de la résine thermodurcissable introduite se mélangent et s'entrelacent aux chaines polymères des films thermoplastiques amorphes 13, 23 de la pièce polymérisée 10 et de la pièce consolidée 20, sans toutefois se lier entre elles, jusqu'à polymérisation complète de la zone de collage.

On obtient ainsi une liaison complètement polymérisée entre la pièce polymérisée 10 et la pièce consolidée 20, avec création d'une liaison forte dans les zones d'interphase entre lesdites deux pièces.

Pour raccourcir l'étape de polymérisation et donc la durée de réalisation de l'assemblage des deux pièces 10, 20, il peut être envisagé de réaliser une étape de polymérisation partielle en lieu et place d'une polymérisation totale puis de réaliser une fin de polymérisation en dehors du moule, par exemple dans une étuve avec d'autres assemblages.

Dans un exemple de mise en oeuvre, il peut être envisagé une étape polymérisation partielle, avec des taux de polymérisation de la résine thermodurcissable de l'ordre de 30 à 40%.

Lorsque les pièces sont de grandes dimensions et/ou ont une géométrie complexe, le procédé d'assemblage peut comporter, préalablement à l'étape d'introduction de la résine thermodurcissable, une étape d'introduction d'un voile perméable (non représenté), dans la zone de collage, entre les premier et second films thermoplastiques amorphes.

En effet, la fabrication des pièces est généralement réalisée avec des tolérances de planéité de surface. Ainsi, lors du positionnement desdites pièces en vis à vis l'une de l'autre, il peut arriver que l'écart entre celles-ci, dit entrefer, ne soit pas homogène. Les deux pièces peuvent ainsi se toucher dans la zone de collage.

Dans un tel cas, pour maintenir une épaisseur minimale d'entrefer et permettre la circulation de la résine dans la zone de collage pendant son introduction, un voile perméable est introduit entre les deux films thermoplastiques amorphes sur tout ou partie de la zone de collage.

Dans un exemple de réalisation, le voile perméable est un voile marquisette ou encore un voile de mariée.

Bien que le procédé ait été décrit pour l'assemblage d'une pièce polymérisée 10 et d'une pièce consolidée 20 comportant chacune un film thermoplastique amorphe 13, 23, il va de soi que le procédé d'assemblage selon l'invention permet également d'assembler entre elles :
- deux pièces polymérisées 10 comportant chacune un film thermoplastique amorphe 13, ou
- deux pièces consolidée 20 comportant chacune un film thermoplastique amorphe 23.

Quelque soit la variante, les mêmes étapes s'appliquent.

Les mêmes avantages que ceux d'un procédé de collage par cocuisson classique sont obtenus, à savoir :
- pas d'opération de préparation de surface des pièces avant leur assemblage,
- liaison insensible à une faible pollution de surface avant le collage,
- bonne tenue mécanique du fait des zones d'interphase créant une liaison forte entre la résine thermodurcissable et la résine thermoplastique amorphe des films. Dans un exemple préféré de réalisation, les deux pièces, polymérisée 10 et/ou consolidée 20, devant être assemblées sont positionnées dans un outillage fermé du type moule-bâche à vide, avec leurs films thermoplastiques respectifs placés en vis-à-vis. Les deux pièces 10, 20 sont avantageusement positionnées dans le moule sans préparation de surface préalablement à la mise en moule. Un jeu minimum entre les deux pièces est assuré par le placement, sur tout ou partie des interfaces, d'un voile fin présentant une grande perméabilité à la résine d'injection. La résine thermodurcissable est injectée dans les interfaces au moyen du procédé RTM (Resin Transfert Molding, terminologie anglo-saxonne, ou procédé de moulage par injection de résine liquide). La résine RTM6 est injectée à une température inférieure à 110°C. Une fois l'injection terminée, la polymérisation a lieu à 180°C pendant 2h. Une fois le cycle de polymérisation terminé, l'assemblage est démoulé.

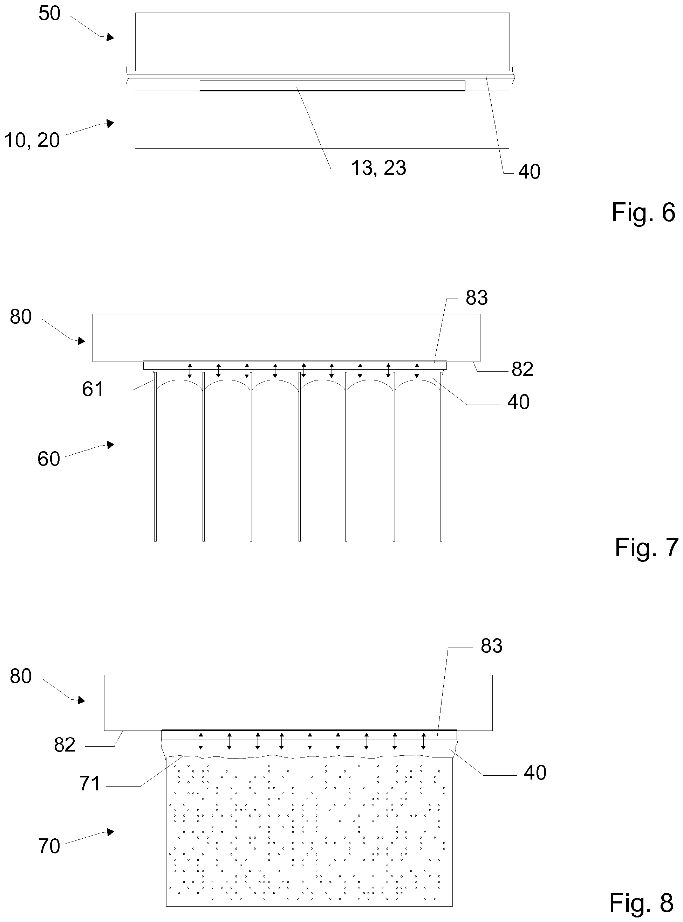

Le procédé d'assemblage selon l'invention permet également l'assemblage d'une première pièce, polymérisée 10 ou consolidée 20 comportant un film thermoplastique amorphe 13, 23 en surface, avec une seconde pièce 50, 60, 70 ne comportant pas de film thermoplastique amorphe en surface, telle que par exemple, et de manière non limitative, une pièce polymérisée, ou partiellement polymérisée, une préforme fibreuse sèche, une pièce consolidée ou encore une pièce métallique, comme illustré sur les figures 6 à 8.

Dans ce cas, lors de l'étape de positionnement, comme illustrée sur la figure 6, la pièce polymérisée 10 ou consolidée 20 avec un film thermoplastique amorphe 13, 23 en surface est placée en vis-à-vis de la seconde pièce 50 sans film thermoplastique amorphe en surface, à l'emplacement où l'assemblage doit être réalisé.

La résine thermodurcissable est préférentiellement introduite sous la forme d'un film adhésif tel que précédemment décrit.

Dans le cas d'un assemblage avec une pièce 50 se présentant sous la forme d'une préforme fibreuse sèche, la résine thermodurcissable est introduite par injection. La résine se répand alors à l'interface mais également dans la préforme sèche.

L'étape de polymérisation, totale ou partielle, est identique à celle décrite précédemment.

Lors de l'étape de polymérisation, à l'interface côté pièce polymérisée 10 ou consolidée 20, les matériaux du film adhésif thermodurcissable et du film thermoplastique vont inter diffuser pendant la polymérisation du film adhésif thermodurcissable, comme décrit précédemment. A l'interface côté seconde pièce 50, pendant le cycle de polymérisation, le film adhésif thermodurcissable va se répartir sur la seconde pièce 50. Le collage est un collage par co-curing (par exemple une pièce partiellement polymérisée ou une préforme fibreuse sèche injectée), ou un collage par co-bonding (par exemple une pièce polymérisée ou consolidée ou métallique).

Un tel procédé d'assemblage (assemblage d'une pièce polymérisée ou consolidée comportant un film thermoplastique amorphe en surface avec toute autre pièce ne comportant pas de film thermoplastique amorphe en surface) est avantageusement applicable à l'assemblage d'un panneau sandwich.

Un panneau sandwich en matériau composite comporte un matériau d'âme collé à deux peaux 80 en matériau composite.

Le matériau d'âme peut être par exemple de type structure alvéolaire 60, par exemple une structure de type nid d'abeilles, classiquement dénommée Nida, ou de type mousse 70.

Chaque peau 80 peut être réalisée en matériau composite à renfort fibreux noyé dans une matrice thermodurcissable ou thermoplastique.

Un tel panneau sandwich peut aisément être assemblé par le procédé d'assemblage selon l'invention.

Dans ce cas, chaque peau 80, qu'elle soit consolidée ou polymérisée, est préalablement réalisée avec un film thermoplastique amorphe 83 sur tout ou partie d'une surface extérieure 82, en l'occurrence celle qui sera en contact avec le matériau d'âme.

Les figures 7 et 8 n'illustrent que l'assemblage entre une peau 80 et le matériau d'âme, l'assemblage de l'autre peau au matériau d'âme étant identique. La figure 7 illustre l'assemblage entre une peau 80 et un matériau d'âme à structure alvéolaire 60. La figure 8 illustre l'assemblage entre une peau 80 et un matériau d'âme de type mousse 70.

Chaque peau 80 est ensuite positionnée de telle sorte que chaque film thermoplastique amorphe 83 est placé en vis-à-vis du matériau d'âme.

La résine est préférentiellement introduite, entre chaque film thermoplastique amorphe 83 et le matériau d'âme, sous la forme d'un film adhésif 40, supporté ou non, tel que précédemment décrit.

L'étape de polymérisation, totale ou partielle, est identique à celle décrite précédemment.

Lors de l'étape de polymérisation, à chaque interface côté peau, les matériaux du film adhésif thermodurcissable et du film thermoplastique vont inter diffuser pendant la polymérisation du film adhésif thermodurcissable, comme décrit précédemment.

A chaque interface côté mousse, pendant le cycle de polymérisation, le film adhésif thermodurcissable va se répartir sur tout ou partie d'une surface extérieure 71 de la mousse 70, comme illustré sur la figure 8.

A chaque interface côté Nida, pendant le cycle de polymérisation, le film adhésif thermodurcissable va se répartir sur les extrémités des parois verticales 61 des cellules du Nida, en formant des ménisques dont la concavité est tournée vers la peau, comme illustré sur la figure 7. Le collage est un collage par par co-bonding. Pour réduire la durée d'assemblage, l'assemblage des deux peaux 80 sur le matériau d'âme est préférentiellement réalisé simultanément. Contrairement aux procédés de collage existants qui nécessitent des opérations de préparation de surface complexes et coûteuses, notamment pour les peaux en matériau composite thermoplastique (traitement par plasma), le procédé selon l'invention permet avantageusement de s'affranchir des opérations de préparation de surface avant collage pour réaliser des panneaux sandwich avec des peaux en matériau composite thermoplastique.

La description ci-avant illustre clairement que par ses différentes caractéristiques et leurs avantages, la présente invention atteint les objectifs qu'elle s'était fixé. En particulier, elle propose un procédé pour assembler entre elles des pièces en matériau composite thermoplastique et/ou des pièces en matériau composite thermodurcissable et/ou des pièces quelconques et présentant une bonne tenue mécanique des liaisons collées. Elle permet ainsi de réaliser des assemblages structuraux, avec des pièces de grandes dimensions et/ou de géométrie complexe indépendamment des matériaux constituant les pièces.

## Revendications

1. Procédé d'assemblage de deux pièces (10, 20, 50, 60, 70, 80), dites première et seconde pièces, la première pièce étant réalisée en matériau composite à renfort fibreux noyé dans une matrice thermodurcissable ou thermoplastique, le procédé comportant les étapes de :
- obtention de la première pièce (10, 20, 80), comportant sur tout ou partie d'une surface extérieure, un premier film thermoplastique amorphe (13, 23, 83),
- positionnement de la première pièce et de la seconde pièce de telle sorte que le premier film thermoplastique amorphe (13, 23, 83) est placé en vis-à-vis de la deuxième pièce,
- introduction d'une résine thermodurcissable entre le premier film thermoplastique amorphe (13, 23, 83) et la seconde pièce,
- polymérisation au moins partielle de ladite résine thermodurcissable.

2. Procédé d'assemblage selon la revendication 1 dans lequel l'étape d'introduction de la résine thermodurcissable est réalisée par l'insertion, entre le premier film thermoplastique amorphe (13, 23, 83) et la seconde pièce, d'un film adhésif (40) comportant une résine thermodurcissable.

3. Procédé d'assemblage selon la revendication 1 dans lequel la résine thermodurcissable est introduite par injection.

4. Procédé d'assemblage selon la revendication 3 comportant une étape d'introduction d'un voile perméable entre le premier film thermoplastique amorphe (13, 23, 83) et la seconde pièce, préalablement à l'étape d'introduction de la résine thermodurcissable.

5. Procédé d'assemblage selon l'une des revendications 1 à 4 dans lequel le premier film thermoplastique amorphe est choisi parmi un polyetherimide (PEI), un polyethersulfone (PES), un polysulfone (PSU) et un polyfluorure de vinylidène (PVDF).

6. Procédé d'assemblage selon l'une des revendications 1 à 5 dans lequel la résine thermodurcissable introduite est du type époxy.

7. Procédé d'assemblage selon l'une des revendications 1 à 6 dans lequel la première pièce est une pièce (10, 20) comportant sur tout ou partie d'une surface extérieure un premier film thermoplastique amorphe, et la seconde pièce est une pièce (10, 20) comportant sur tout ou partie d'une surface extérieure un second film thermoplastique amorphe, et dans lequel les deux pièces sont positionnées de telle sorte que les premier et second films thermoplastiques amorphes sont placés en vis-à-vis, et la résine thermodurcissable est introduite entre les premier et second films thermoplastiques amorphes.

8. Ensemble structural obtenu conformément au procédé d'assemblage selon l'une des revendications 1 à 7.

9. Procédé d'assemblage d'un panneau sandwich comportant un matériau d'âme (60, 70) entre deux peaux (80), dites première et seconde peau, chaque peau (80) étant réalisée en matériau composite à renfort fibreux noyé dans une matrice thermodurcissable ou thermoplastique comportant sur tout ou partie d'une surface extérieure un film thermoplastique amorphe, ledit procédé comportant les étapes de :
- assemblage de la première peau (80) et du matériau d'âme (60, 70) selon le procédé d'assemblage conforme à l'une des revendications 1 à 6, la première peau (80) correspondant à la première pièce et le matériau d'âme à la seconde pièce,
- assemblage de la seconde peau (80) et du matériau d'âme (60, 70) selon le procédé d'assemblage conforme à l'une des revendications 1 à 6, la deuxième peau (80) correspondant à la première pièce et le matériau d'âme à la seconde pièce.

10. Panneau sandwich obtenu conformément au procédé d'assemblage de la revendication 9.

## Patentansprüche

1. Verfahren zum Zusammenfügen von zwei Teilen (10, 20, 50, 60, 70, 80), erstes und zweites Teil genannt, wobei das erste Teil aus einem Verbundmaterial mit einer Faserverstärkung hergestellt ist, die in eine duroplastische oder thermoplastische Matrix eingebettet ist, wobei das Verfahren die folgenden Schritte umfasst:
- Bereitstellen des ersten Teils (10, 20, 80), das auf der gesamten Außenfläche oder einem Teil davon eine erste amorphe thermoplastische Folie (13, 23, 83) aufweist,
- Positionieren des ersten Teils und des zweiten Teils so, dass die erste amorphe thermoplastische Folie (13, 23, 83) dem zweiten Teil gegenüberliegt,
- Einbringen eines duroplastischen Harzes zwischen die erste amorphe thermoplastische Folie (13, 23, 83) und das zweite Teil,
- zumindest teilweises Polymerisieren des duroplastischen Harzes.

2. Fügeverfahren nach Anspruch 1, wobei der Schritt des Einbringens des duroplastischen Harzes durch Einfügen einer Klebefolie (40), die ein duroplastisches Harz enthält, zwischen die erste amorphe thermoplastische Folie (13, 23, 83) und das zweite Teil erfolgt.

3. Fügeverfahren nach Anspruch 1, wobei das duroplastische Harz durch Injektion eingebracht wird.

4. Fügeverfahren nach Anspruch 3, umfassend einen Schritt des Einbringens einer durchlässigen Bahn zwischen die erste amorphe thermoplastische Folie (13, 23, 83) und das zweite Teil vor dem Schritt des Einbringens des duroplastischen Harzes.

5. Fügeverfahren nach einem der Ansprüche 1 bis 4, wobei die erste amorphe thermoplastische Folie ausgewählt ist aus Polyetherimid (PEI), Polyethersulfon (PES), Polysulfon (PSU) und Polyvinylidenfluorid (PVDF).

6. Fügeverfahren nach einem der Ansprüche 1 bis 5, wobei das eingebrachte duroplastische Harz vom Epoxidtyp ist.

7. Fügeverfahren nach einem der Ansprüche 1 bis 6, wobei das erste Teil ein Teil (10, 20) ist, das auf der gesamten Außenfläche oder einem Teil davon eine erste amorphe thermoplastische Folie aufweist, und das zweite Teil ein Teil (10, 20) ist, das auf der gesamten Außenfläche oder einem Teil davon eine zweite amorphe thermoplastische Folie aufweist, und wobei die beiden Teile so positioniert werden, dass die erste und die zweite amorphe thermoplastische Folie einander gegenüberliegen, und das duroplastische Harz zwischen die erste und die zweite amorphe thermoplastische Folie eingebracht wird.

8. Baugruppe, hergestellt gemäß dem Fügeverfahren nach einem der Ansprüche 1 bis 7.

9. Verfahren zum Zusammenfügen einer Sandwichplatte mit einem Kernmaterial (60, 70) zwischen zwei Häuten (80), erste und zweite Haut genannt, wobei jede Haut (80) aus einem Verbundmaterial mit Faserverstärkung hergestellt ist, das in eine duroplastische oder thermoplastische Matrix eingebettet ist, die auf der gesamten Außenfläche oder einem Teil davon eine amorphe thermoplastische Folie aufweist, wobei das Verfahren die folgenden Schritte umfasst:
- Zusammenfügen der ersten Haut (80) und des Kernmaterials (60, 70) mit dem Fügeverfahren nach einem der Ansprüche 1 bis 6, wobei die erste Haut (80) dem ersten Teil und das Kernmaterial dem zweiten Teil entspricht,
- Zusammenfügen der zweiten Haut (80) und des Kernmaterials (60, 70) mit dem Fügeverfahren nach einem der Ansprüche 1 bis 6, wobei die zweite Haut (80) dem ersten Teil und das Kernmaterial dem zweiten Teil entspricht.

10. Sandwich-Platte, hergestellt gemäß dem Fügeverfahren nach Anspruch 9.

## Claims

1. Method for joining two parts (10, 20, 50, 60, 70, 80), referred to as first and second parts, the first part being made of a composite material with fibrous reinforcement embedded in a thermosetting or thermoplastic matrix, the method comprising the steps of:
- obtaining the first part (10, 20, 80), comprising a first amorphous thermoplastic film (13, 23, 83) over all or part of an outer surface,
- positioning the first part and the second part such that the first amorphous thermoplastic film (13, 23, 83) is placed facing the second part,
- introducing a thermosetting resin between the first amorphous thermoplastic film (13, 23, 83) and the second part,
- at least partially polymerizing said thermosetting resin.

2. Method for joining according to Claim 1, in which the step of introducing the thermosetting resin is done by inserting, between the first amorphous thermoplastic film (13, 23, 83) and the second part, an adhesive film (40) comprising a thermosetting resin.

3. Method for joining according to Claim 1, in which the thermosetting resin is introduced by injection.

4. Method for joining according to Claim 3, comprising a step of introducing a permeable textile between the first amorphous thermoplastic film (13, 23, 83) and the second part, prior to the step of introducing the thermosetting resin.

5. Method for joining according to one of Claims 1 to 4, in which the first amorphous thermoplastic film is chosen from a polyetherimide (PEI), a polyethersulfone (PES), a polysulfone (PSU) and a polyvinylidene fluoride (PVDF).

6. Method for joining according to one of Claims 1 to 5, in which the introduced thermosetting resin is of the epoxy type.

7. Method for joining according to one of Claims 1 to 6, in which the first part is a part (10, 20) comprising a first amorphous thermoplastic film over all or part of an outer surface, and the second part is a part (10, 20) comprising a second amorphous thermoplastic film over all or part of an outer surface, and in which the two parts are positioned such that the first and second amorphous thermoplastic films are placed facing one another, and the thermosetting resin is introduced between the first and second amorphous thermoplastic films.

8. Structural assembly obtained in accordance with the joining method according to one of Claims 1 to 7.

9. Method for assembling a sandwich panel comprising a core material (60, 70) between two skins (80), referred to as first and second skins, each skin (80) being made of a composite material with fibrous reinforcement embedded in a thermosetting or thermoplastic matrix, comprising an amorphous thermoplastic film over all or part of an outer surface, said method comprising the steps of:
- joining the first skin (80) and the core material (60, 70) in accordance with the joining method according to one of Claims 1 to 6, the first skin (80) corresponding to the first part and the core material corresponding to the second part,
- joining the second skin (80) and the core material (60, 70) in accordance with the joining method according to one of Claims 1 to 6, the second skin (80) corresponding to the first part and the core material corresponding to the second part.

10. Sandwich panel obtained in accordance with the assembling method of Claim 9.
